# EUROPEAN PATENT SPECIFICATION

(11) **EP 1 877 311 B1**
(45) Date of publication and mention of the grant of the patent: **10.11.2010**
(21) Application number: 06744747.4
(22) Date of filing: 28.04.2006
(51) Int. Cl.: B65B 3/02, B29C 49/00, A23G 9/26, A23G 3/12, A23G 7/00

(54) **EQUIPMENT AND METHOD FOR PRODUCING THERMOFORMED AND HEAT-SEALED CONTAINERS**
AUSRÜSTUNG UND VERFAHREN ZUR HERSTELLUNG VON WÄRMEGEFORMTEN UND HEISSGESIEGELTEN BEHÄLTERN
EQUIPEMENT ET PROCEDE DE PRODUCTION DE RECIPIENTS THERMOFORMES ET THERMOSOUDES

(30) Priority: 02.05.2005 IT BO20050302
(43) Date of publication of application: 16.01.2008
(73) Proprietor: Unifill S.r.l., 20145 Milano (MI) (IT)
(72) Inventor: PARINI, Massimiliano, 44040 Alberone di Cento FE (IT)
(74) Representative: Provvisionato, Paolo
(86) International application number: PCT/IB2006/001340
(87) International publication number: WO 2006/117678

(56) References cited:
- EP-A- 0 479 152
- EP-A- 0 719 630
- WO-A-01/25089
- WO-A-98/47772
- WO-A-99/59890
- WO-A-2004/086875
- DE-A1- 3 919 324

## Description

The present invention relates to the field of thermoformed and heat-sealed containers. Specifically, although not exclusively, the present invention is intended to provide equipment for producing containers by thermoforming and heat-sealing a material, and, even more specifically, one or more work stations for thermoforming and heat-sealing a pair of flaps of material and for inserting objects into the said flaps of material.

Methods of forming containers from thermoformable and heat-sealable material by means of a sequence of work stations have been known for many years. In some of the known solutions, the sequence comprises a pre-heating station for softening predetermined regions of material, a station for sealing the edges of these regions along open profiles corresponding to the edges of the containers, and a forming station for deforming the said regions by the injection of a forming fluid. The containers formed in this way are then sent to further stations for filling, closing and cutting.

There are also known methods of forming containers made from thermoformable and heat-sealable material which contain a solid product and an insert which enables this product to be handled when the container has been opened. For example, there is a known method of producing containers for ice cream, ice lollipops or cheeses, into which a stick is inserted to enable the user to hold the product during its consumption. The document WO 95/05749 filed by the present applicant, for example, describes a method for the confection of food products and a corresponding package comprising the product and an insert. The equipment for using this method comprises a sealing station for sealing the edges of the container, a forming station for forming a main cavity and a mouth region of the container, a station for dispensing the inserts into the container through the mouth region, a fluid product supply station for filling the container through the said mouth region, and a station for sealing the mouth region.

Furthermore, WO-A-99/59890 discloses an equipment in accordance with the preamble of claim 1.

One of the main limitations of the equipment described above is that the dimensions and shape of the mouth region impede the insertion into the container of inserts having dimensions greater than the diameter of the mouth region, and of any inserts having a non-linear longitudinal extension.

The object of the present invention is to improve the aforementioned equipment by providing equipment for forming containers made from thermoformable and heat-sealable plastics material and each containing an object, more preferably an insert, of any shape, even if curved, asymmetrical, indented and/or spiral, and whether made of rigid or other material. In the following text, the term "insert" denotes, for example, but not exclusively, a spatula, a stick, a handle, a wick, or other similar element.

Another object of the invention is to provide a method for producing containers made from thermoformable and heat-sealable plastics material, each comprising an insert, which has the aforementioned characteristics and which also enables savings of material to be made by comparison with the known methods for producing containers.

A further object of the invention is to provide equipment for forming thermoformed and heat-sealed containers which is simple, economical, easily serviced and highly reliable even after prolonged use.

In order to achieve the aforementioned objects, the invention proposes equipment as defined in claim 1 below.

The invention also proposes a method for producing thermoformed and heat-sealed containers, each containing an insert, and a container thus produced, having the characteristics indicated in claim 13 below.

According to an advantageous characteristic of the present invention, the means for forming the container comprise moulding means and means for injecting a forming fluid, the latter means preferably being movable with respect to the moulding means. The injection means comprise injection nozzles whose ends, opening within the central region of the container, are connected to a fluid injection system which enables the central region of the container to be formed. According to a particularly advantageous characteristic of the present invention, the lengths of the injection nozzles are graduated in the direction of advance of the flaps of material so as to facilitate the insertion of the nozzles between the flaps of material without damaging them.

According to a further advantageous characteristic of the present invention, the forming station can be used to form containers with a wide mouth region which is significantly wider than the corresponding mouth region of known thermoformed and heat-sealed containers, thus enabling a device for dispensing the product contained in the container to be inserted into it.

Further characteristics and advantages will be made clear by the following detailed description of a preferred example of embodiment, with reference to the attached figures, provided purely by way of example and without restrictive intent, in which:

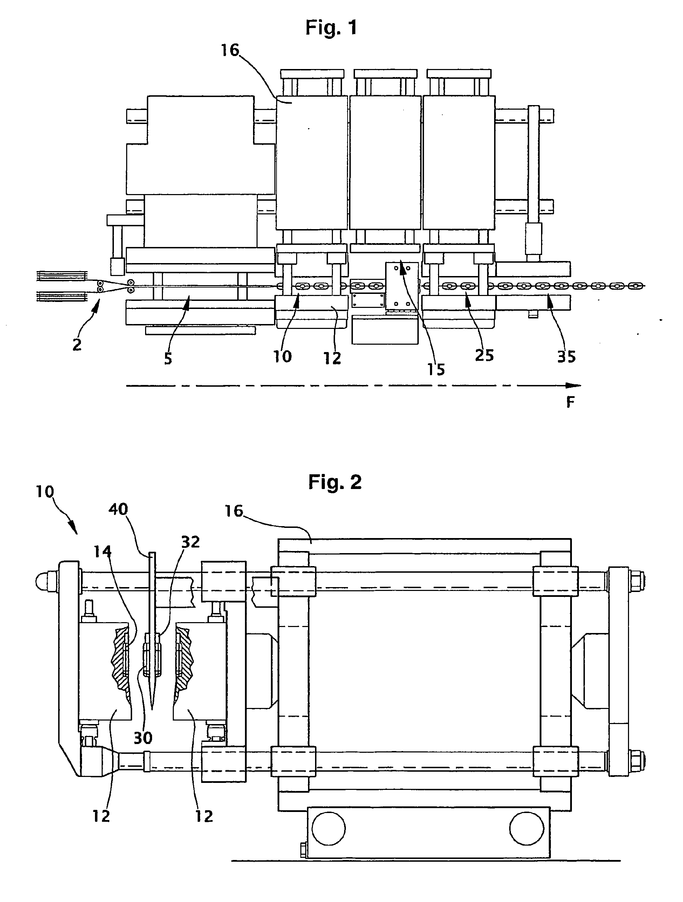

- Figure 1 is a view from above of equipment for producing containers made from thermoformable and heat-sealable material according to the present invention;
- Figure 2 is a sectional view from the side of a thermoforming station included in the equipment shown in Figure 1;
- Figure 3 is a sectional view of a station for inserting inserts according to the present invention;
- Figure 4 is a sectional view from the front of a further embodiment of a thermoforming station according to the present invention; and

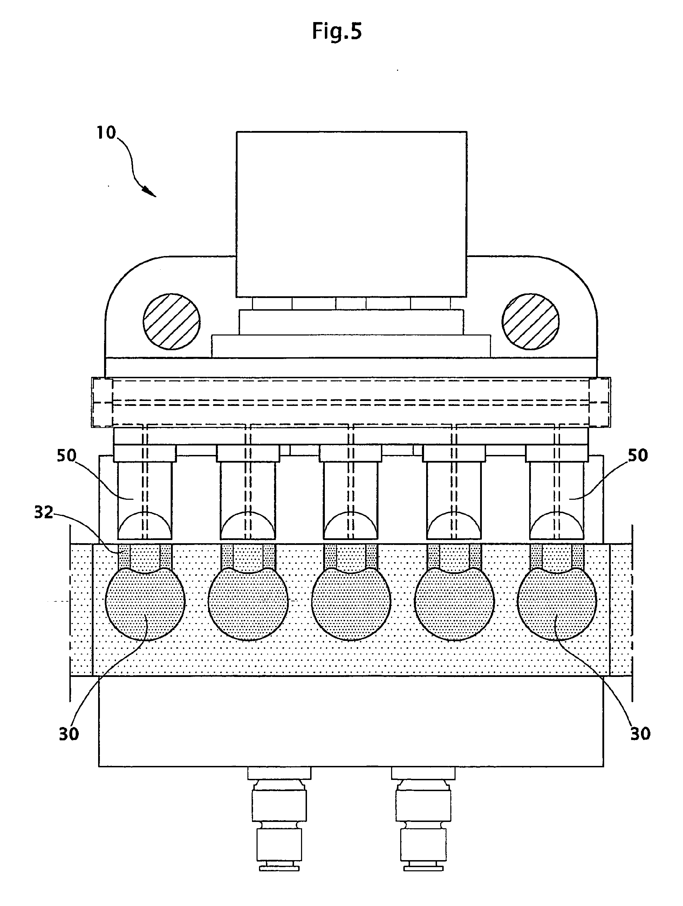

- Figure 5 is a front view of the injection means of the embodiment of Figure 4.

With reference to the figures, equipment for producing containers made from thermoformable and heat-sealable material comprises supply means for supplying the said material 2 to a thermoforming station 10 in a preferred direction F. The material generally comprises at least two flaps which can be formed from a single strip folded along its median axis, or from two separate strips of material placed side by side. The flaps of material can consist of continuous strips of material, taken from a reel of material for example, or of strips of finite dimensions having a predetermined length.

The thermoforming station 10 according to the present invention comprises forming means, including moulding means, for example, but not exclusively, two die blocks 12, positioned facing each other and connected movably to a main frame 16 by movement means 15 of a known type. The die blocks 12 are movable towards and away from each other in a transverse direction with respect to the said direction of advance F of the material to be thermoformed. Each die block 12 comprises an inner surface which faces the flaps of material and in which thermoforming surfaces 14 of a known type are formed to create at least one central region 30 and a mouth region 32 of the container.

Clearly, the thermoforming surfaces 14 can be designed in different ways according to the shape of the container to be produced, and can comprise additional elements for creating specific patterns and/or impressions on the surfaces of the containers when they are formed, without departure from the scope of the present invention.

The thermoforming station 10 also comprises means for separating the two flaps of material, for example, but not exclusively, a separating plate 40, engaged with the frame 16 and positioned between the two die blocks 12. The separating plate 40 can be coated with predetermined materials, for example Teflon®, which can prevent the adhesion of the separating plate 40 to the flaps of thermoformable material during operation. The plate 40 can preferably be cooled to a predetermined temperature to reduce the temperature of the flaps of material during operation, thus stiffening the said flaps and facilitating their transport. The separating plate 40 is preferably engaged rigidly with the frame 16 of the thermoforming station, but it is also possible to provide a separating plate which is movable in a vertical direction with respect to the horizontal direction of advance F of the material.

The means for forming the container also comprise means for injecting a forming fluid, for example, but not exclusively, injection nozzles formed on the surface of the plate 40, positioned side by side and spaced apart at predetermined intervals. The injection nozzles are connected to an injection system, for example a device for injecting a pressurized forming fluid, preferably heated, which can shape the flaps of material during operation. In particular, the fluid injection device comprises inlet means, for example a valve or an inlet tube, for a forming fluid, connected to allow a flow to the injection nozzles.

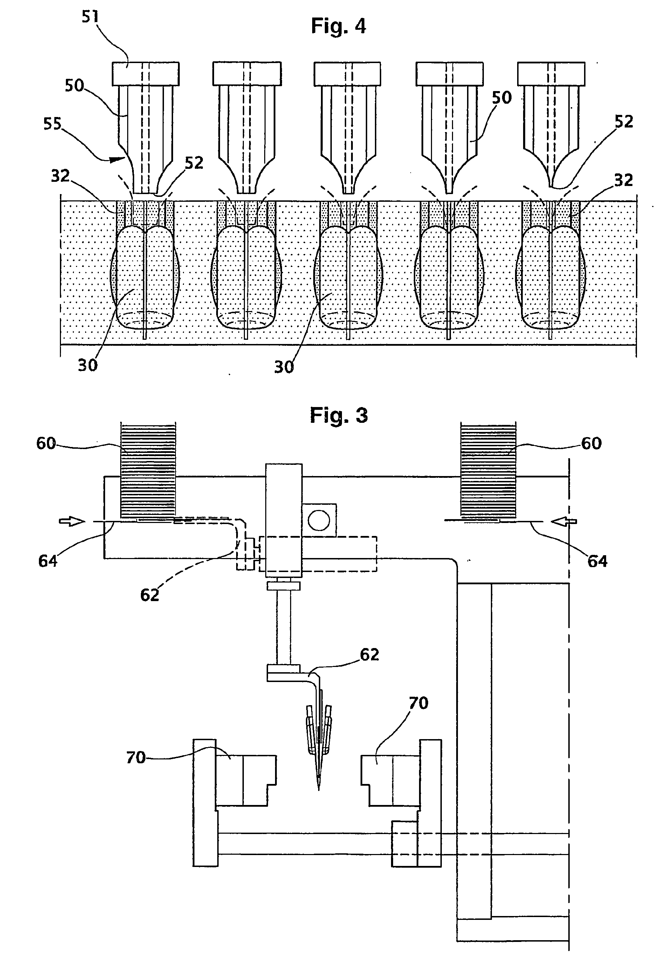

The equipment according to the present invention also comprises an insert dispensing station 15 upstream of the thermoforming station. As shown more fully in Figure 3, the dispensing station 15 comprises an insert dispensing device comprising one or more insert receptacles 60 and means for picking up and dispensing the inserts, for example, but not exclusively, a pair of grippers 62 movable along a predetermined path from the receptacles 60 to a point near the mouths 32 of the containers. The insert dispensing device 15 also comprises means 64 for singling the inserts, to make available to the grippers 62 a single insert from the group of inserts contained in the receptacles 60. The illustrated dispensing device is shown purely by way of example and can of course be modified to adapt it to the different types of inserts to be inserted into the containers.

The dispensing station 15 also comprises a pair of sealing means, for example one or more sealing presses 70 which can seal the flaps of material while following the profile of the insert in the lower portion of the container. The last-mentioned characteristic is particularly advantageous in that it enables the insert to be secured between the flaps of material, thus ensuring its correct alignment with respect to the forming process and providing a better seal between the flaps of material and the insert in order to prevent leaks of the product which is subsequently inserted into the central region 30 of the container.

Finally, the equipment according to the present invention comprises a further sealing station 25 in which the sealing of the edges of the containers is completed, and a cooling station 35 in which heat is removed from the flaps of thermoformed material in order to consolidate the sealing and reinforce the strip to prevent undesired curvature during the remainder of the container production procedure.

During operation, the flaps of material are made to advance into the thermoforming station 10 over a predetermined distance sufficient for the forming of a predetermined number of containers. The separating plate 40 enables the flaps of material to be kept separate and spaced apart.

At this point, the two die blocks 12 are brought towards each other in such a way as to close on each other and grip the flaps of material between their inner surfaces 14 and the surfaces of the separating plate 40. In this way the separating plate provides a good sealing surface, thus preventing any subsequent outflow of the forming fluid.

The forming fluid is then injected between the flaps of material in the proximity of the central region 30 and enables the two flaps to be partially moved apart in this region, keeping them at a high temperature and improving their adhesion to the thermoforming walls to enable a pair of half-shells of the container to be formed.

On completion of the thermoforming stage, the two blocks 12 open and are moved away from the flaps of material, which are thus made to advance towards the next station for insertion of the inserts, while further flaps of material are simultaneously made to advance into the thermoforming station for the next forming stage.

In another preferred embodiment of the present invention, shown in Figure 4, the forming station comprises different means for separating the two flaps of material, for example injection nozzles 50 positioned side by side and spaced apart at predetermined intervals. The nozzles 50 are substantially elongate in form along a preferred direction and are positioned along a direction substantially orthogonal to the direction of advance F of the thermoformable material. Each of the nozzles 50 comprises an injection outlet 52 at one end, and the nozzles are connected to an injection device, for example a device for injecting a pressurized forming fluid, preferably heated, which can shape the flaps of material. In particular, the injection device comprises inlet means, for example an inlet valve or tube, for a forming fluid, connected to allow a flow to the injection nozzles 50.

As explained more fully below, the injection nozzles 50 also contribute to the forming of the mouth of the container 32, and their shapes and sizes can therefore differ from each other, in such a way that they can form mouths of different shapes and sizes within a single thermoforming station. In particular, as shown in the figures, each injection nozzle has a substantially tubular body with an upper portion 51 comprising means for connection to the manifold and a tapered lower end 53 to facilitate the entry of the nozzle into the mouth region during operation. The tubular bodies can have different lengths, and similarly the lower portions 53 can be made with different shapes from each other.

The lengths of the injection nozzles 50 can be graduated in the direction F of advance of the flaps of material. The first nozzle also comprises a surface 55, facing the outside of the thermoforming station, with a more pronounced convexity than that of the surfaces of the other nozzles. The convex surface 55 enables the nozzles to be inserted progressively during operation between the flaps of material in the mouth regions 32.

The injection nozzles 50 can be engaged with movement means, for example, but not exclusively, a manifold connected to actuator means which enable the nozzles to move vertically towards and away from the flaps of material. Alternatively, the injection nozzles can be fixed to the frame of the thermoforming station. The choice between the two embodiments can be made according to the type of forming to be carried out and/or according to the type of material to be used, without departure from the scope of the present invention.

During operation, the flaps of material are made to advance into the thermoforming station 10 for a predetermined distance which is sufficient for the forming of a predetermined number of containers. In this stage, the injection nozzles 50 are in a raised idle position, such that the injection outlets 52 lie outside the flaps of material. Before the flaps of material stop moving, the manifold is lowered to bring the nozzles 50 towards the flaps of material.

The injection nozzles 50 are then inserted in the proximity of the mouth regions 32, in such a way that the injection nozzles 52 are located in the mouth regions 32 of the flaps of material. The separating plate 40 enables the flaps of material to be kept separate and spaced apart to facilitate the stage of insertion of the injection nozzles.

In particular, when the manifold starts to be lowered towards the flaps of material, the first nozzle is immediately inserted between the flaps of material, and then, as the manifold continues to descend and the flaps of material continue to advance in the direction F, the other nozzles are also inserted progressively between the flaps of material, which are spaced apart and thus facilitate the insertion of the lower ends of the nozzles into the mouth regions 32.

At this point, the two die blocks 12 are brought towards each other in such a way that they close on each other and grip the flaps of material between their inner surfaces 14 and the surfaces of the separating plate 40. In this way the separating plate provides a good sealing surface, as do the nozzles, with respect to the die blocks, thus preventing any subsequent outflow of the forming fluid.

The forming fluid is then injected between the flaps of material in the proximity of the central region 40 and enables the two flaps to be partially moved apart in this region, keeping them at a high temperature and improving their adhesion to the thermoforming walls to enable a pair of half-shells of the container to be formed.

On completion of the thermoforming stage, the two blocks 12 open and are moved away from the flaps of material, while the nozzles 50 are simultaneously raised and return to an idle position, in which the injection nozzles 52 are outside the flaps of material. The flaps of material are advanced towards the next station for the insertion of the inserts, while further flaps of material are simultaneously made to advance into the thermoforming station for the next forming stage.

Both of the stages of the method of the present invention described up to this point enable a forming fluid to be injected between the flaps of material while keeping these flaps independent of each other during the forming, regardless of the embodiment of the separating means described above. This characteristic enables the half-shells of the containers to be spaced apart on their arrival at the station for the insertion of the inserts, thus facilitating the insertion of an insert of any shape, even if it is curved, asymmetrical, indented and/or spiral, whether or not it is made from rigid material.

As soon as the portion of material comprising the predetermined number of half-shells of the containers formed previously has been inserted into the dispensing station 15, the insert dispensing device immediately dispenses the inserts between each pair of half-shells of the containers. The sealing presses 70 are then brought towards.the half-shells of the containers to model and seal the flaps of material while following the profile of the insert in the lower portions of the half-shells of the containers. In this way the insert is secured between the flaps of material, thus ensuring its correct alignment with respect to the forming process and providing a better seal between the flaps of material and the insert in order to prevent leaks of the product which is subsequently inserted into the central region 30 of the container.

When this stage is also completed, the flaps of material comprising the half-shells of the containers with the insert inside them are made to advance into the subsequent sealing station 25 to complete the sealing of the edges of the containers, and into the cooling station 35 to remove heat from the thermoformed flaps of material. The sealed containers containing the inserts then undergo the normal subsequent stages of filling, sealing the mouths, and cutting to separate the individual containers.

As the above description makes clear, the method according to the present invention makes it possible to insert into the previously formed half-shells of the containers objects which because of their shape could not be inserted through the mouth regions into the half-shells formed and sealed in the prior art devices.

A further advantageous characteristic of the present invention consists in the fact that, by forming the mouths of the containers before the stage of sealing their edges, it is possible to decrease the portions of the flaps of material which are normally left unsealed to allow the entry of the forming nozzles. Moreover, the flaps of material arriving at the thermoforming station have a relatively low temperature, equal to the ambient temperature for example. Since the thermoforming moulds are closed on to the flaps of material when the forming elements have already penetrated into the mouth regions, the mouths are formed at a temperature which permits an excellent finish, with clearly defined edges and undamaged surfaces. These characteristics provide further advantages in the subsequent sealing station, but especially in the stations for filling and closing the containers, since the sealing of the containers formed in this way is considerably enhanced.

In another preferred embodiment, the equipment for producing containers of thermoformable and heat-sealable material also comprises a station 5 for preheating the flaps of material, positioned upstream of the thermoforming station 10. The preheating station 5 comprises heating means, for example, but not exclusively, a pair of heating plates, positioned facing each other and movable towards and away from each other in a transverse direction with respect to the said direction of advance F of the material to be thermoformed. Each plate comprises a heating surface facing the flaps of material to heat one or both of the flaps of material during operation, and to bring them to a predetermined temperature which is particularly suitable for the correct thermoforming of the containers in the next station. The heating means can selectively heat the flaps of material in such a way that the temperatures of the two flaps are equal or in such a way that the temperature of one of the two flaps is higher than the temperature of the other flap of material.

Clearly, provided that the principles of the invention are retained, the forms of embodiment and the details of construction can be varied widely from those described and illustrated, without departure from the scope of the invention.

## Claims

1. Equipment for producing thermoformable and heat-sealable containers of the type comprising an object within each container, the equipment comprising:
- at least one thermoforming work station for thermoforming predetermined portions of a pair of flaps of thermoformable and heat-sealable material in such a way as to define a central region (30) and at least one mouth region (32),
- at least a heat-sealing work station sealing the edges of the said container,
- a dispensing objects work station for dispensing objects into the containers,
**characterised in that** the thermoforming station is positioned upstream of the least one station for dispensing objects, which in turn is positioned upstream of said heat-sealing station.

2. Equipment according to Claim 1, **characterized in that** the thermoforming station comprises means (40, 50) for separating the flaps of material, positioned between the flaps of material during operation to keep the flaps separated during the forming stage.

3. Equipment according to Claim 2, **characterized in that** the separating means comprise injection means.

4. Equipment according to Claim 3, **characterized in that** the separating means comprise a separating plate (40).

5. Equipment according to Claim 4, **characterized in that** the injection means comprise nozzles formed on at least one of the surfaces of the separating plate (40).

6. Equipment according to Claim 3, **characterized in that** the injection means comprise one or more injection nozzles (50).

7. Equipment according to Claim 6, **characterized in that** the injection nozzles (50) are positioned side by side and spaced apart at predetermined intervals.

8. Equipment according to Claim 7, **characterized in that** the nozzles (50) are substantially elongate in form along a preferred direction and are positioned along a direction substantially orthogonal to the direction of advance (F) of the thermoformable material.

9. Equipment according to Claim 8, **characterized in that** each of the nozzles (50) has an injection outlet (52) at its end.

10. Equipment according to Claim 9, **characterized in that** the lengths of the nozzles (50) are graduated along the direction (F) of advance of the flaps of material.

11. Equipment according to Claim 10, **characterized in that** at least one of the nozzles (50) comprises a surface (55) facing the outside of the thermoforming station, with a more pronounced convexity than that of the surfaces of the other nozzles (50).

12. Equipment according to Claim 11, **characterized in that** the injection nozzles (50) are engaged with movement means.

13. Method for producing thermoformable and heat-sealable containers, **characterized in that** it comprises the subsequent stages of:
- thermoforming predetermined portions of a pair of flaps of thermoformable and heat-sealable material in such a way as to define a central region (30) and at least one mouth region (32) opening on the outside of the container and communicating with the said central region (30);
- inserting an object between the said predetermined portions of each flap of material in the central region (30);
- sealing the edges of the said central region (30) and sealing the edges of the said mouth region (32), at least along the greater part of their lengths, in such a way as to leave the said mouth region open;
- filling the said central region (30) of the container with a product by introducing it through the mouth region (32), and sealing the end of the said mouth region (32) to seal the container.

## Patentansprüche

1. Ausrüstung zur Herstellung von thermoformbaren und heißsiegelbaren Behältern der Art, die einen Gegenstand in jedem Behälter umfasst, wobei die Ausrüstung Folgendes umfasst:
- mindestens eine Thermoform-Arbeitsstation zum Thermoformen vorbestimmter Abschnitte eines Paars Lappen aus thermoformbarem und heißsiegelbarem Material, so dass ein mittlerer Bereich (30) und mindestens ein Öffnungsbereich (32) definiert werden,
- mindestens eine Heißsiegel-Arbeitsstation, an der die Ränder des Behälters gesiegelt werden,
- eine Arbeitsstation zur Ausgabe von Gegenständen zum Ausgeben von Gegenständen in die Behälter, **dadurch gekennzeichnet, dass** die Thermoform-Arbeitsstation stromaufwärts von der mindestens einen Station zur Ausgabe von Gegenständen positioniert ist, die ihrerseits stromaufwärts von der Heißsiegel-Station positioniert ist.

2. Ausrüstung nach Anspruch 1, **dadurch gekennzeichnet, dass** die Thermoform-Station Mittel (40, 50) zum Trennen der Materiallappen umfasst, die während des Betriebs zwischen den Materiallappen positioniert sind, um die Lappen während des Formstadiums getrennt zu halten.

3. Ausrüstung nach Anspruch 2, **dadurch gekennzeichnet, dass** die Trennmittel Spritzmittel umfassen.

4. Ausrüstung nach Anspruch 3, **dadurch gekennzeichnet, dass** die Trennmittel eine Trennplatte (40) umfassen.

5. Ausrüstung nach Anspruch 4, **dadurch gekennzeichnet, dass** die Spritzmittel an mindestens einer der Flächen der Trennplatte (40) ausgebildete Düsen umfassen.

6. Ausrüstung nach Anspruch 3, **dadurch gekennzeichnet, dass** die Spritzmittel eine oder mehrere Spritzdüsen (50) umfassen.

7. Ausrüstung nach Anspruch 6, **dadurch gekennzeichnet, dass** die Spritzdüsen (50) nebeneinander und mit vorbestimmten Abständen voneinander beabstandet positioniert sind.

8. Ausrüstung nach Anspruch 7, **dadurch gekennzeichnet, dass** die Düsen (50) eine im Wesentlichen längliche Form in einer bevorzugten Richtung haben und entlang einer im Wesentlichen orthogonal zur Vorschubrichtung (F) des thermoformbaren Materials verlaufenden Richtung positioniert sind.

9. Ausrüstung nach Anspruch 8, **dadurch gekennzeichnet, dass** jede der Düsen (50) an ihrem Ende einen Spritzauslass (52) hat.

10. Ausrüstung nach Anspruch 9, **dadurch gekennzeichnet, dass** die Längen der Düsen (50) entlang der Vorschubrichtung (F) der Materiallappen abgestuft sind.

11. Ausrüstung nach Anspruch 10, **dadurch gekennzeichnet, dass** mindestens eine der Düsen (50) eine Fläche (55) umfasst, die zur Außenseite der Thermoform-Station weist und eine ausgeprägtere Ausbuchtung als die Flächen der anderen Düsen (50) aufweist.

12. Ausrüstung nach Anspruch 11, **dadurch gekennzeichnet, dass** die Spritzdüsen (50) mit Bewegungsmitteln in Eingriff stehen.

13. Verfahren zur Herstellung von thermoformbaren und heißsiegelbaren Behältern, **dadurch gekennzeichnet, dass** es die folgenden aufeinanderfolgenden Schritte umfasst:
- Thermoformen vorbestimmter Abschnitte eines Paars Lappen aus thermoformbarem und heißsiegelbarem Material derart, dass ein mittlerer Bereich (30) und mindestens ein Öffnungsbereich (32), der an der Außenseite des Behälters mündet und mit dem mittleren Bereich (30) in Verbindung steht, definiert werden,
- Einfügen eines Gegenstands zwischen die vorbestimmten Abschnitte jedes Materiallappens im mittleren Bereich (30),
- Siegeln der Ränder des mittleren Bereichs (30) und Siegeln der Ränder des Öffnungsbereichs (32) mindestens entlang dem größeren Teil ihrer Länge, so dass der Öffnungsbereich offen gelassen wird,
- Füllen des mittleren Bereichs (30) des Behälters mit einem Produkt, indem es durch den Öffnungsbereich (32) eingeführt wird, und Siegeln des Endes des Öffnungsbereichs (32) zum Siegeln des Behälters.

## Revendications

1. Equipement pour produire des conteneurs thermoformables et thermoscellables du type comprenant un objet à l'intérieur de chaque conteneur, l'équipement comprenant :
- au moins un poste de thermoformage pour thermoformer des parties prédéterminées d'une paire de volets de matériau thermoformable et thermoscellable de manière à définir une région centrale (30) et au moins une région de bouche (32),
- au moins un poste de thermoscellage scellant les bords dudit conteneur,
- un poste de distribution d'objets pour distribuer des objets dans les conteneurs,
**caractérisé en ce que** le poste de thermoformage est positionné en amont de l'au moins un poste de distribution d'objets, qui est positionné en amont dudit poste de thermoscellage.

2. Equipement selon la revendication 1, **caractérisé en ce que** le poste de thermoformage comprend des moyens (40, 50) pour séparer les volets de matériau, positionnés entre les volets de matériau pendant le fonctionnement pour maintenir les volets séparés au cours de l'étape de formage.

3. Equipement selon la revendication 2, **caractérisé en ce que** les moyens de séparation comprennent des moyens d'injection.

4. Equipement selon la revendication 3, **caractérisé en ce que** les moyens de séparation comprennent une plaque de séparation (40).

5. Equipement selon la revendication 4, **caractérisé en ce que** les moyens d'injection comprennent des gicleurs formés sur au moins l'une des surfaces de la plaque de séparation (40).

6. Equipement selon la revendication 3, **caractérisé en ce que** les moyens d'injection comprennent un ou plusieurs gicleurs d'injection (50).

7. Equipement selon la revendication 6, **caractérisé en ce que** les gicleurs d'injection (50) sont positionnés côte à côte et espacés l'un de l'autre à des intervalles prédéterminés.

8. Equipement selon la revendication 7, **caractérisé en ce que** les gicleurs (50) sont de forme sensiblement allongée dans une direction préférée et sont positionnés dans une direction sensiblement orthogonale à la direction d'avancée (F) du matériau thermoformable.

9. Equipement selon la revendication 8, **caractérisé en ce que** chacun des gicleurs (50) a une sortie d'injection (52) à son extrémité.

10. Equipement selon la revendication 9, **caractérisé en ce que** les longueurs des gicleurs (50) sont graduées dans la direction (F) d'avancée des volets de matériau.

11. Equipement selon la revendication 10, **caractérisé en ce qu'**au moins l'un des gicleurs (50) comprend une surface (55) faisant face à l'extérieur du poste de thermoformage, avec une convexité plus prononcée que celle des surfaces des autres gicleurs (50).

12. Equipement selon la revendication 11, **caractérisé en ce que** les gicleurs d'injection (50) sont engagés avec des moyens de mouvement.

13. Procédé pour produire des conteneurs thermoformables et thermoscellables, **caractérisé en ce qu'**il comprend les étapes suivantes consistant à :
- thermoformer des parties prédéterminées d'une paire de volets de matériau thermoformable et thermoscellable de manière à définir une région centrale (30) et au moins une région de bouche (32) s'ouvrant sur l'extérieur du conteneur et communiquant avec ladite région centrale (30) ;
- insérer un objet entre lesdites parties prédéterminées de chaque volet de matériau dans la région centrale (30) ;
- sceller les bords de ladite région centrale (30) et sceller les bords de ladite région de bouche (32), au moins le long de la plus grande partie de leurs longueurs, de manière à laisser ladite région de bouche ouverte ;
- remplir ladite région centrale (30) du conteneur avec un produit en l'introduisant à travers la région de bouche (32) et en scellant l'extrémité de ladite région de bouche (32) pour sceller le conteneur.
